# EUROPEAN PATENT APPLICATION

(11) **EP 3 716 530 A1**
(43) Date of publication of application: **30.09.2020**
(21) Application number: 19165857.4
(22) Date of filing: 28.03.2019
(51) Int. Cl.: H04L 12/24, H04L 12/26, H04L 12/28

(54) **WI-FI DATA ANALYZER**

(71) Applicant: Nokia Solutions and Networks Oy, 02610 Espoo (FI)
(72) Inventor: Abdulsalam, Najurudeen, 622507 Tamil Nadu (IN)
(74) Representative: TBK

(57) **Abstract**

An apparatus controlling a wireless network, the apparatus comprises a receiving circuitry configured to receive device identification information indicative of a device connected to the wireless network, a retrieving circuitry configured to retrieve device specification information indicative of at least one property of said device based on said device identification data, a determining circuitry configured to determine device environment information indicative of at least one environmental condition of said device, an analyzing circuitry configured to analyze said device specification information and said device environment information, a generating circuitry configured to generate a notification signal including a result of said analyzing circuitry, and a transmitting circuitry configured to transmit said notification signal.

## Description

### Field

The present invention relates to acquiring Wi-Fi information on a device, which is wirelessly connected to an apparatus providing said wireless network.

### Background

Getting Wi-Fi-specific information, like RSSI, Rx rate, and Tx rate, on a device connected to a wireless network is not a not user-friendly operation. Additionally, configuring a modem (apparatus providing said wireless network) in view of such Wi-Fi-specific information is even a less user-friendly operation.

Thus, at present, troubleshooting and configuring a modem's Wi-Fi parameters in a connected Home Wi-Fi Network are not user-friendly actions, since plenty of parameters like band steering and preferred channel override, as well as plenty of actions like finding a suitable broadband width and removing a Wi-Fi interference source for a connected device, are to be considered. Consequently, a user gets lost easily and quickly feels frustrated and overstrained.

It is therefore an object of the present invention to solve these disadvantages.

### Summary

Various exemplary embodiments of the present disclosure aim at addressing at least part of the above issues and/or problems and drawbacks.

Various aspects of at least some exemplary embodiments are set out in the appended claims.

In order to solve the above identified disadvantages, according to an exemplary aspect of various exemplary embodiments, there is provided an apparatus controlling a wireless network, wherein the apparatus comprises a receiving circuitry configured to receive device identification information indicative of a device connected to the wireless network, a retrieving circuitry configured to retrieve device specification information indicative of at least one property of said device based on said device identification data, a determining circuitry configured to determine device environment information indicative of at least one environmental condition of said device, an analyzing circuitry configured to analyze said device specification information and said device environment information, a generating circuitry configured to generate a notification signal including a result of said analyzing circuitry, and a transmitting circuitry configured to transmit said notification signal.

According to an exemplary aspect of various exemplary embodiments, there is provided a method for controlling a wireless network, wherein the method comprises the steps of receiving device identification information indicative of a device connected to the wireless network, retrieving device specification information indicative of at least one property of said device based on said device identification data, determining device environment information indicative of at least one environmental condition of said device, analyzing said device specification information and said device environment information, generating a notification signal including a result of said analyzing circuitry, and transmitting said notification signal.

According to an exemplary aspect of various exemplary embodiments, there is provided a computer program comprising instructions, which, when executed by a mobile device, cause the mobile device to carry out: capturing an image of a device connected to a wireless network, determining device identification information indicative of said device based on said image, transmitting said device identification information, receiving, in response to said transmitting, a notification signal indicative of an analyzing result with respect to said device and said wireless network, and displaying information based on said notification signal.

Any one of the above aspects enables a reliable and/or efficient controlling of a wireless network to thereby solve at least part of the problems and drawbacks identified in relation to the prior art.

Thus, improvement is achieved by apparatuses, methods and computer program products enabling/realizing realization of adjusting a wireless network connection between a device and an apparatus controlling the wireless network.

Apparatuses, methods and computer program products are not necessarily limited to Home Wi-Fi networks, but are, generally, applicable on any wireless network connection between a device and an apparatus controlling the wireless network.

### Brief description of the drawings

In the following, the present invention will be described in greater detail by way of non-limiting examples with reference to the accompanying drawings, in which
Figure 1 is a diagram, illustrating a premium Wi-Fi solution web application,
Figure 2 is a diagram, illustrating an apparatus controlling a wireless network according to various exemplary embodiments,
Figure 3 is a flowchart, showing steps corresponding to a method according to various exemplary embodiments,
Figure 4 is a flowchart, showing steps, wherein a computer program comprising instructions, which, when executed by a mobile device, causes a mobile device to carry out these steps, according to various exemplary embodiments,
Figure 5 is a diagram, illustrating application cases of the computer program according to various exemplary embodiments,
Figure 6 is a diagram, showing an overall architecture according to various exemplary embodiments,
Figure 7 is a diagram, illustrating a data structure comprising detailed wireless network parameters according to various exemplary embodiments,
Figure 8 is a diagram, illustrating an application case according to various exemplary embodiments, and
Figure 9 is a diagram, illustrating another application case according to various exemplary embodiments.

### Detailed description of drawings and embodiments of the present invention

Various exemplary embodiments are described herein with reference to particular non-limiting examples. A person skilled in the art will appreciate that the disclosure is by no means limited to these examples, and may be more broadly applied.

It is to be noted that the following description of various exemplary embodiments mainly refers to specifications being used as non-limiting examples for certain exemplary configurations and deployments. As such, the description of exemplary embodiments given herein specifically refers to terminology which is directly related thereto. Such terminology is only used in the context of the presented non-limiting examples, and does naturally not limit the disclosure in any way. Rather, any other communication related system deployment, etc. may also be utilized as long as compliant with the features described herein.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

According to various exemplary embodiments in order to, in general terms, adjusting wireless network parameters at an apparatus controlling a wireless network, there are provided apparatuses, methods, and computer programs to solve these problems.

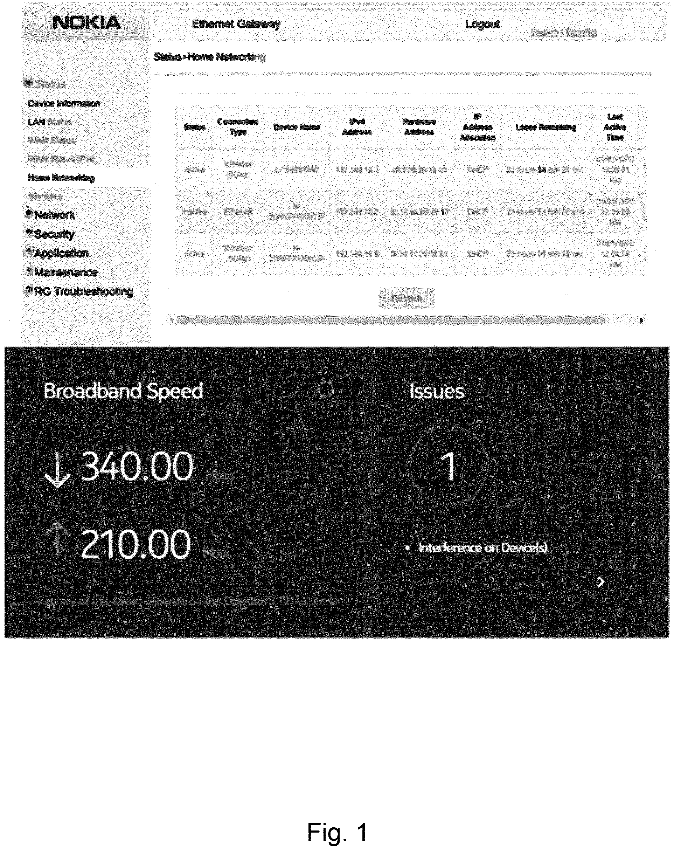

Commonly, a user has to use a (premium) Wi-Fi solution web application, as illustrated in Figure 1, by using a web browser for fine-tuning a modem's Wi-Fi configuration. However, the user should still have very high network skills in order to perform action through Linux configuration or will need manual effort in using data for only minor improvements.

Thus, for example, the user needs to know the suitable bandwidth speed for his/her HD smart TV, as well as, the suitable band (5GHz or 2.4GHz) for his/her device to improve said device's connectivity. Further, the user needs to know about interference occurring in his/her Wi-Fi network due to external devices, as well as which channel is less affected by interference for an improved Wi-Fi experience. Thus, the user also needs to know how to change to a preferred channel in an easy way.

Besides, for configuring a modem's Wi-Fi parameters, login into any (premium) Wi-Fi solution web applications is still required.

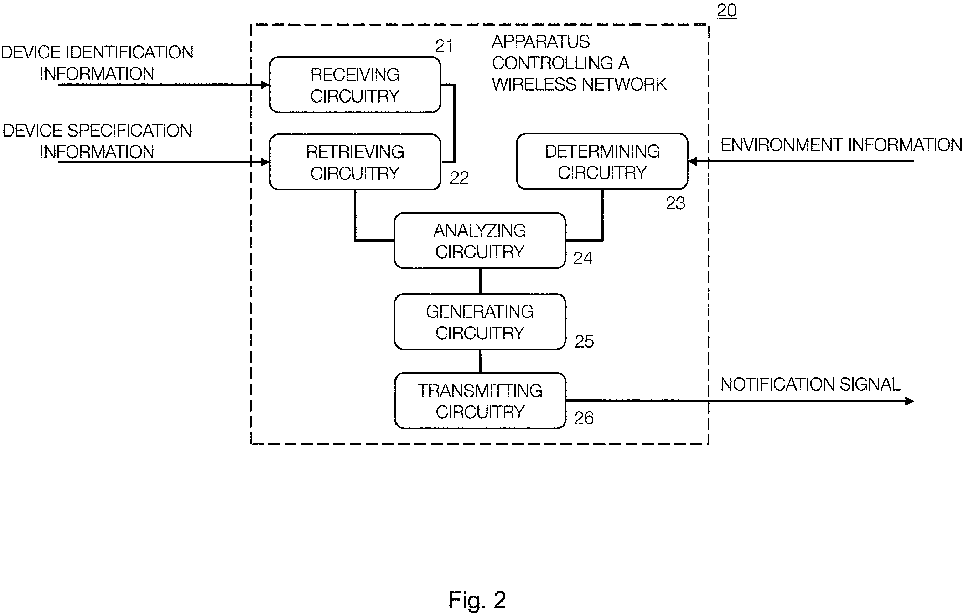

Figure 2 is a diagram, illustrating an apparatus 20 controlling a wireless network according to at least some exemplary embodiments.

In particular, according to Figure 2, an apparatus 20 controlling a wireless network comprises a receiving circuitry 21, a retrieving circuitry 22, a determining circuitry 23, an analyzing circuitry 24, a generating circuitry 25, and a transmitting circuitry 26.

The receiving circuitry 21 is configured to receive device identification information indicative of a device connected to the wireless network. The retrieving circuitry 22 is configured to retrieve device specification information indicative of at least one property of said device based on said device identification data. The determining circuitry 23 is configured to determine device environment information indicative of at least one environmental condition of said device. The analyzing circuitry 24 is configured to analyze said device specification information and said device environment information. The generating circuitry 25 is configured to generate a notification signal including a result of said analyzing circuitry. The transmitting circuitry 26 is configured to transmit said notification signal.

In various exemplary embodiments, at least some of the functionalities of the apparatus shown in Figure 2 may be shared between two physically separate apparatuses forming one operational entity. Therefore, the apparatus may be seen to depict the operational entity comprising one or more physically separate apparatuses for executing at least some of the described processes.

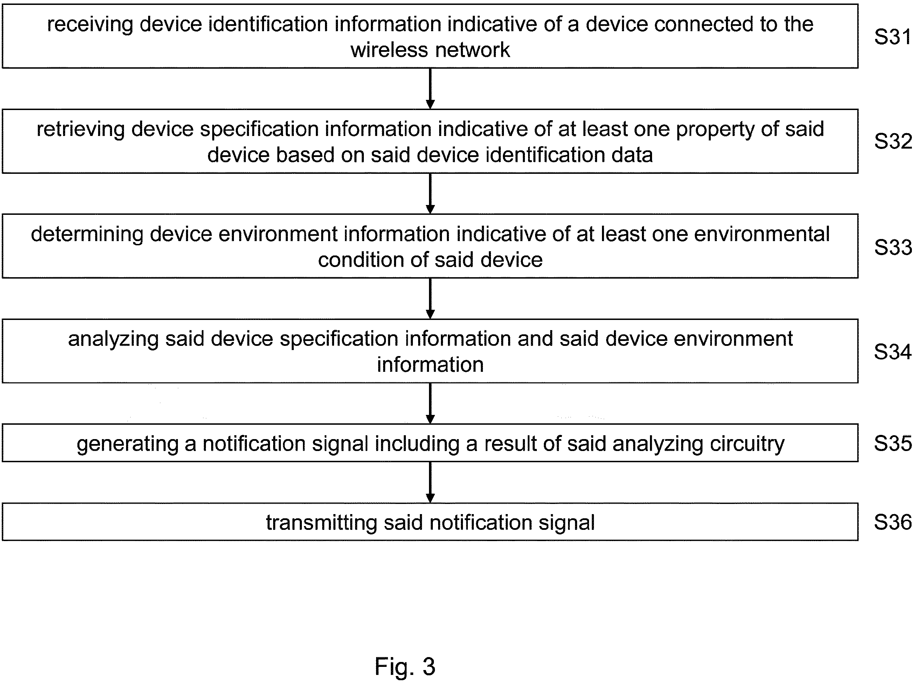

Figure 3 is a flowchart, showing steps corresponding to a method according to at least some exemplary embodiments. The apparatus according to Figure 2 may perform the method of Figure 3 but is not limited to this method. The method of Figure 3 may be performed by the apparatus of Figure 2 but is not limited to being performed by this apparatus.

In particular, according to Figure 3, a method for controlling a wireless network comprises receiving, at step S31, device identification information indicative of a device connected to the wireless network. It further comprises retrieving, at step S32, device specification information indicative of at least one property of said device based on said device identification data, determining, at step S33, device environment information indicative of at least one environmental condition of said device, and analyzing, at step S34, said device specification information and said device environment information. The method further comprises generating, at step S35, a notification signal including a result of said analyzing circuitry, and transmitting, at step S36, said notification signal.

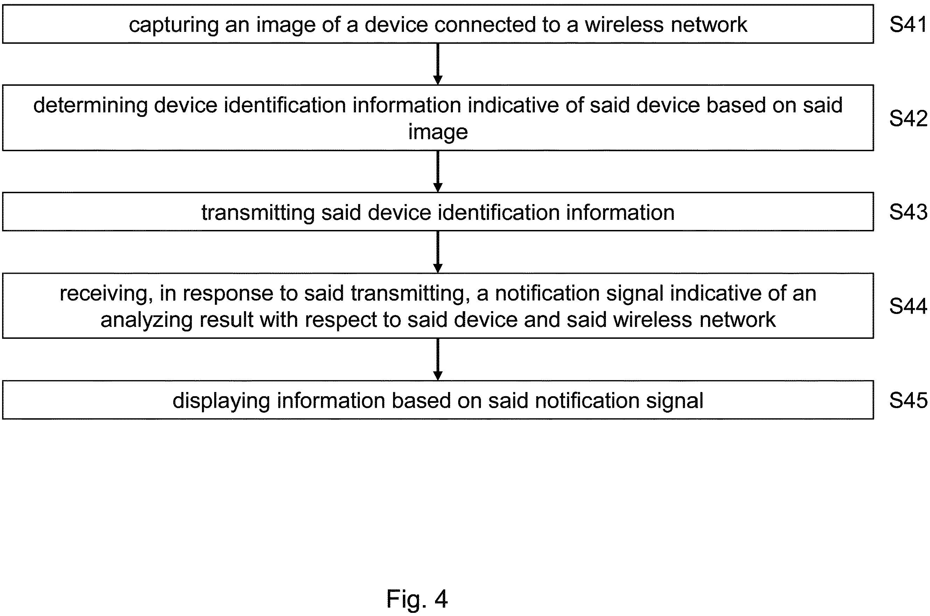

Figure 4 is a flowchart, showing steps, wherein a computer program comprising instructions, which, when executed by a mobile device, cause a mobile device to carry out these steps, according to an exemplary embodiment of the present invention. The computer program according to Figure 4 may be applied in combination with the apparatus of Figure 2 and/or the method of Figure 3 but is not limited thereto. The apparatus of Figure 2 and/or the method of Figure 3 may be applied in combination with the computer program according to Figure 4, but is/are not limited thereto.

In particular, according to Figure 4, a computer program comprising instructions, which, when executed by a mobile device, causes the mobile device to carry out capturing, at step S41, an image of a device connected to a wireless network, determining, at step S42, device identification information indicative of said device based on said image, and transmitting, at step S43, said device identification information. It further causes receiving, at step S44, in response to said transmitting, a notification signal indicative of an analyzing result with respect to said device and said wireless network, and displaying, at step S45, information based on said notification signal.

In the following, further exemplary embodiments are described in relation to the apparatus 20 according to Figure 2. However, these exemplary embodiments may also be valid in relation with the aforementioned method according to Figure 3. Additionally, in the following, further exemplary embodiments are described in relation to the computer program according to Figure 4.

According to various exemplary embodiments, said retrieving circuitry 22 may be configured to retrieve said device specification information from a device specification database.

Further, according to at least some exemplary embodiments, the analyzing circuitry 24 may be configured to compare at least one item of said device specification information or said device environment information with a predetermined value.

According to various exemplary embodiments, the analyzing circuitry 24 may be configured to ascertain a network related optimum condition with respect to said device based on said device specification information and said device environment information, and to detect at least one wireless network related parameter to be adjusted to approach said network related optimum condition.

Further, according to various exemplary embodiments, the analyzing circuitry 24 may also be configured to identify, for a first wireless network related parameter of said at least one wireless network related parameter, a parameter value to be set to approach said network related optimum condition as said result of said analyzing circuitry.

Additionally, according to at least some exemplary embodiments, the receiving circuitry 21 may also be configured to receive a parameter value acknowledgment signal indicative of acknowledgment of setting said first wireless network related parameter to said parameter value, and the apparatus 20 further comprises a setting circuitry configured to control setting said first wireless network related parameter to said parameter value.

According to various exemplary embodiments, said device may be a first device, wherein a second device is connected to said wireless network, and a result of said analyzing circuitry 24 with respect to said first device is based on first device specification information related to said first device and second device specification information related to said second device.

Further, according to at least some exemplary embodiments, said device identification information may be indicative of at least one of a manufacturer name of said device and a model name of said device, and/or said at least one property of said device may be at least one of a hostname, a MAC address, a wireless network interface type, a device type, a model number, a connected service set identifier (SSID), a received signal strength indicator (RSSI), an uplink rate requirement, and a downlink rate requirement, and/or said at least one environmental condition of said device may be at least one of a channel score, a provided wireless network uplink rate, a provided wireless network downlink rate, a wireless network uplink error rate, a wireless network downlink error rate, information on an interference device, a service set identifier (SSID) of at least one neighbored wireless network, a received signal strength indicator (RSSI) of said at least one neighbored wireless network, a value indicative of experienced noise, a value indicative of channel utilization, a network uplink rate with respect to a connected internet port, and a network downlink rate with respect to said connected internet port.

According to various exemplary embodiments, if, as a result of the analyzing circuitry 24, an internet bandwidth experienced by said apparatus 20 does not meet a demand of internet bandwidth requirement of said device, the notification signal may comprise a suggestion to improve a bandwidth speed with specific data. Alternatively, or in addition, if, as a result of the analyzing circuitry 24, said device is operating with a signal strength below a predetermined threshold, the notification signal may comprise a suggestion to reposition the corresponding device or to establish extenders and/or beacons. Alternatively, or in addition, if, as a result of the analyzing circuitry 24, interference details disturbing said wireless network are found, the notification signal may comprise a suggestion to remove a source of the interference and/or to change to a less interference affected wireless network channel.

According to at least some exemplary embodiments, the computer program may further comprise instructions, which, when executed by a mobile device, cause the mobile device to carry out processing said captured image, wherein said determining may be based on a result of said processing.

Further, according to various exemplary embodiments, in relation to said determining, the instructions, which, when executed by a mobile device, may cause the mobile device to carry out requesting said device identification information from a device database based on said image, and receiving said device identification information from said device database.

According to various exemplary embodiments, said notification signal may be indicative of at least one of a hostname of said device, a MAC address of said device, a wireless network interface type of said device, a device type of said device, a model number of said device, a connected service set identifier (SSID), a received signal strength indicator (RSSI), an uplink rate requirement of said device, a downlink rate requirement of said device, a channel score, a provided wireless network uplink rate, a provided wireless network downlink rate, a wireless network uplink error rate, a wireless network downlink error rate, information on an interference device, a service set identifier (SSID) of at least one neighbored wireless network, a received signal strength indicator (RSSI) of said at least one neighbored wireless network, a value indicative of experienced noise, a value indicative of channel utilization, a network uplink rate with respect to a connected internet port, and a network downlink rate with respect to said connected internet port.

Further, according to at least some exemplary embodiments, said notification signal may be indicative of a parameter value for a wireless network related parameter, the parameter value may be to be set to approach a network related optimum condition with respect to said device, and the instructions, which, when executed by a mobile device, may cause the mobile device to carry out displaying an acknowledgement button for acknowledgment of setting said parameter value, and transmitting, in response to operation of said acknowledgement button by a user, a parameter value acknowledgment signal indicative of acknowledgment of setting said wireless network related parameter to said parameter value.

In the following, the above and further exemplary embodiments will be described in more detail.

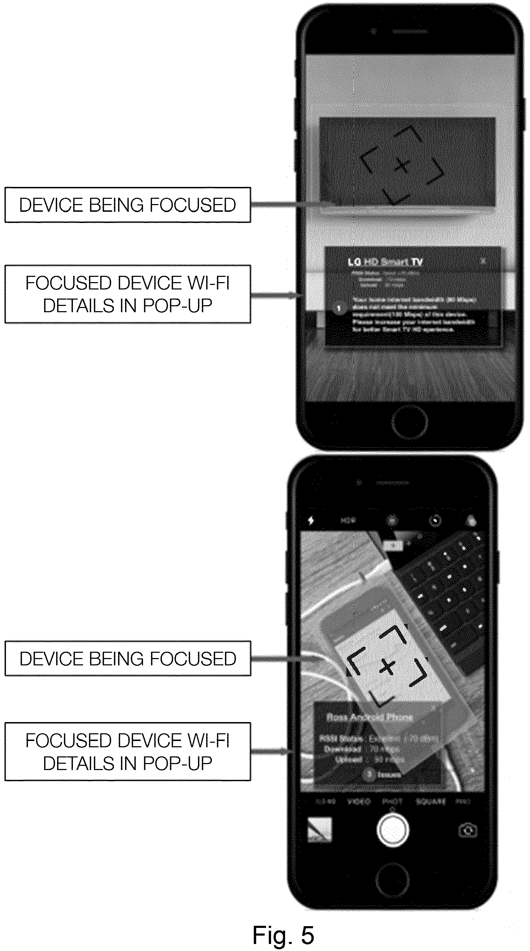

Figure 5 is a diagram, illustrating application cases of the computer program according to at least some exemplary embodiments.

Particularly, as illustrated in Figure 5, wireless network parameters corresponding to a specific device, which is a Smart TV in the upper part of Figure 5, and a Smartphone in the lower part of Figure 5, can be acquired by applying the computer program on a mobile device, according to various exemplary embodiments. Thus, a user can easily acquire device identification information of a device connected to the wireless network, with no need to e.g. use a (premium) Wi-Fi solution web application (see Figure 1).

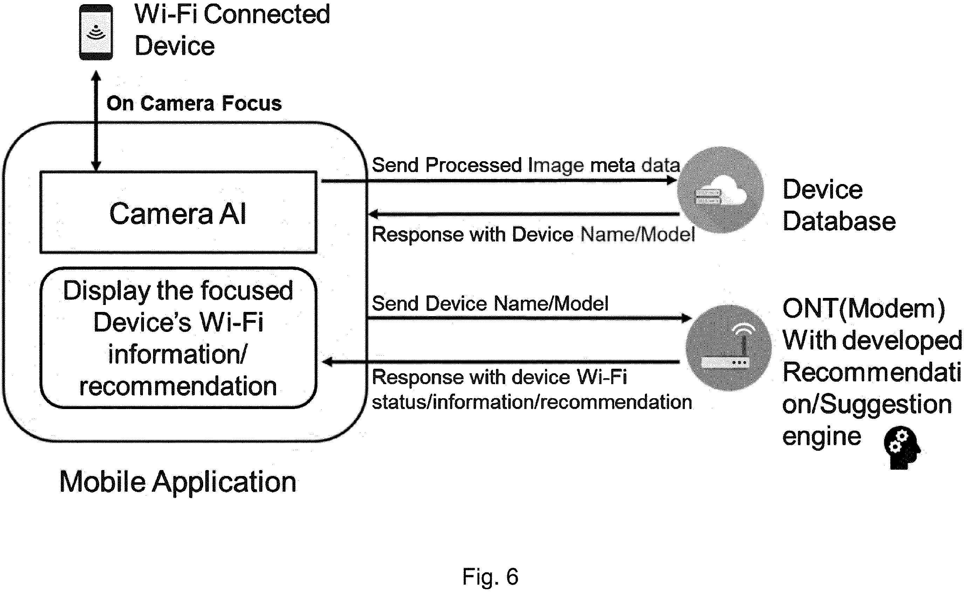

Figure 6 is a diagram, showing an overall architecture according to an exemplary embodiment of the present invention. In particular, based on the overall architecture as illustrated in Figure 6, an implementation flow according to various exemplary embodiments may be defined as follows:

A user opens a mobile application (e.g. computer program according to Figure 4) and connects with a modem (e.g. an apparatus controlling a wireless network according to Figure 2) as admin using ONR/Modems API (mobile application API agent).

Further, the user focuses a Wi-Fi connected device using a camera (mobile application camera) of said mobile device, wherein the camera has Artificial Intelligence (AI) to process the image of the focused Wi-Fi connected device to acquire device identification information corresponding to the Wi-Fi connected device.

Then, the mobile application sends the processed image meta data (device identification information) to query a device database to receive in response device specification information like the model/name of the focused Wi-Fi connected device.

Further, the mobile application sends, based on the device identification information, the model/name (representing device specification information) of the focused Wi-Fi connected device to the modem. In response, the modem queries environment information like RSSI, Rx rate, Tx rate corresponding to the Wi-Fi connected device.

Then, a modem recommendation/suggestion manager, comprised by the modem, can analyze the device specification information in combination with the environment information based on data processing and applied processing intelligence.

That is, the modem recommendation/suggestion manager collects data from the modem (environment information) and from the device database (device specification information) and processes it. Examples thereof include Home device operating configuration, Tx/Rx rates from the connected home devices, RSSI of the connected devices, and/or channel quality.

For processing said collected data, an analytics engine is used, wherein the analytics engine has an intelligence logic to compare data with expected predefined data and, then, to suggest possibilities for improving connectivity, e.g. improving the connectivity of the focused Wi-Fi connected device.

The modem recommendation/suggestion manager can analyze the Wi-Fi connected device's Wi-Fi parameters and external parameters (device specific information) in order to make possible suggestions for improving a Wi-Fi experience corresponding to the Wi-Fi connected device, wherein improving Wi-Fi experience e.g. comprises reducing interferences, increasing Tx/Rx rates, etc.

After data processing, the modem recommendation/suggestion manager transmits a notification signal indicative of information/recommendation corresponding to said focused Wi-Fi connected device to the mobile application applied by the user.

The mobile application displays the received notification signal, e.g. comprising Wi-Fi parameters, and/or configuration, and/or recommendation, and/or network issues corresponding to the focused Wi-Fi connected device.

These recommendations will help the user to initiate/instruct the ONT/Modem to act on a given recommendation/suggestion.

In view of possible recommendations, there may be to be considered Wi-Fi interference due to radio devices, that is devices that share a channel make interference and weaken the Wi-Fi strength. Additionally, there may be considered electrical interference from devices like refrigerators, computers, fans, lighting fixtures, etc. The impact electrical interference has on a Wi-Fi signal depends on the proximity of the electrical device to the wireless access point. Also, some parameters can have a big impact on a wireless signal, like lightning, which can cause electrical interference, and fog, which can weaken Wi-Fi signals as they pass through.

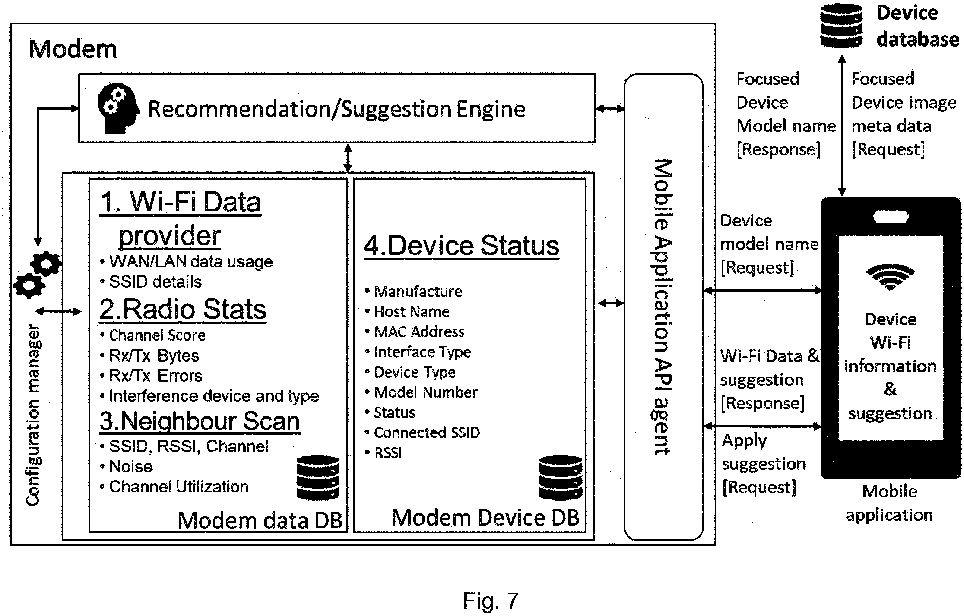

Figure 7 is a diagram, illustrating a data structure comprising detailed wireless network parameters used according to various exemplary embodiments.

In particular, according to Figure 7, a recommendation/suggestion engine can use modem's data like SSID, WAN/LAN data, Rx/Tx rate, device status, hostname, channel details, interference, bands, etc., and so some analysis based on the above mentioned intelligence logic in order to generate suggestions for connectivity improvement and/or remove issues for a focused Wi-Fi connected device can be performed.

Suggestions/recommendations corresponding to the focused Wi-Fi connected device will be displayed on the mobile application screen corresponding to the mobile device applied by the user. Thus, the user can apply a suggestion by clicking a resolve button, which is displayed on the mobile application screen. Then, the recommendation engine will communicate the command (inserted by pressing the resolve button) to the modem configuration manager to modify the changes.

According to at least some exemplary embodiments, the following recommendations/suggestions corresponding to a focused Wi-Fi connected device may be displayed:
The recommendation/suggestion engine may investigate the internet bandwidth requirement of the Wi-Fi connected device along with a modem's average broadband speed. When the internet bandwidth does not meet the demand, then it is suggested to the user to improve the bandwidth speed with specific data.

The recommendation/suggestion engine may monitor the connectivity of all Wi-Fi devices connected to the modem, and assess signal strength corresponding to the Wi-Fi connection corresponding to each Wi-Fi connected device. If the engine detects that devices are actively operating with a signal strength lower than a predetermined threshold value, or frequently lose connection, then the engine will suggest to reposition the devices or to introduce Extender/Beacons.

If a modem's chipset supports the feature to find interference details within a corresponding Wi-Fi network, the recommendation/suggestion engine may then, in case of an interference being present, suggest to remove the source of interference (e.g. a microwave, baby monitor, cordless phone, etc.) and/or to change to a less interference-affected channel (i.e. preferred channel).

The recommendation/suggestion engine may indicate recommendations/ suggestions to the user, in case of Wi-Fi backhaul in case of or loss of connectivity of the Extender/Beacon.

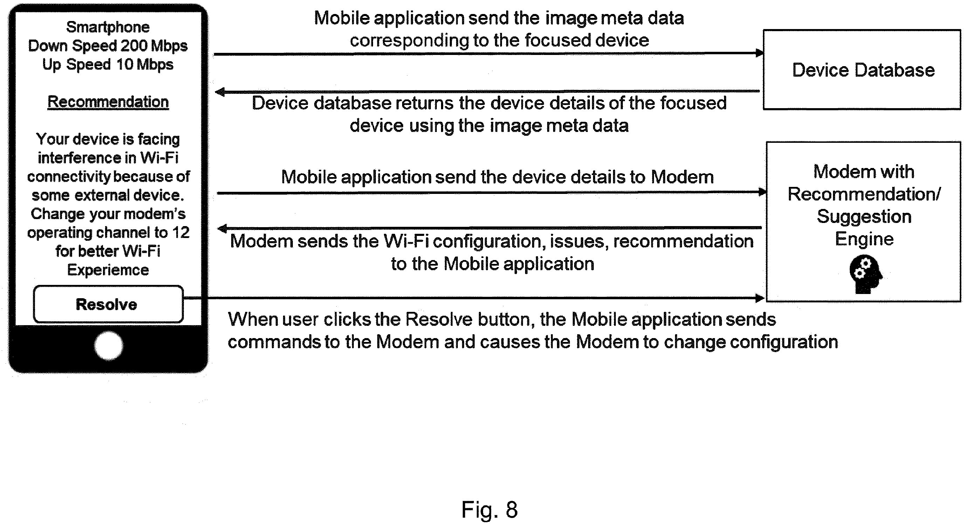

Figure 8 is a diagram, illustrating an application case according to various exemplary embodiments.

In particular, according to Figure 8, a Smartphone (Wi-Fi connected device) is focused (see lower part of Figure 5). The mobile application then sends image meta data of the focused Smartphone to a device database. In response, the mobile application receives device specific information corresponding to the Smartphone. Then, the mobile application sends these device specific information to the modem, wherein the modem comprises the recommendation/suggestion engine. The modem checks for interferences for the operating channel corresponding to the Smartphone and suggests an available proffered channel for better Wi-Fi performance (for e.g. increasing signal strength). In response, the mobile application receives Wi-Fi configuration, issues, and recommendation from the modem. Then, if the user clicks the button ("Resolve") as illustrated according to Figure 8, the modem's operating channel in view of the Smartphone would be changed to 12.

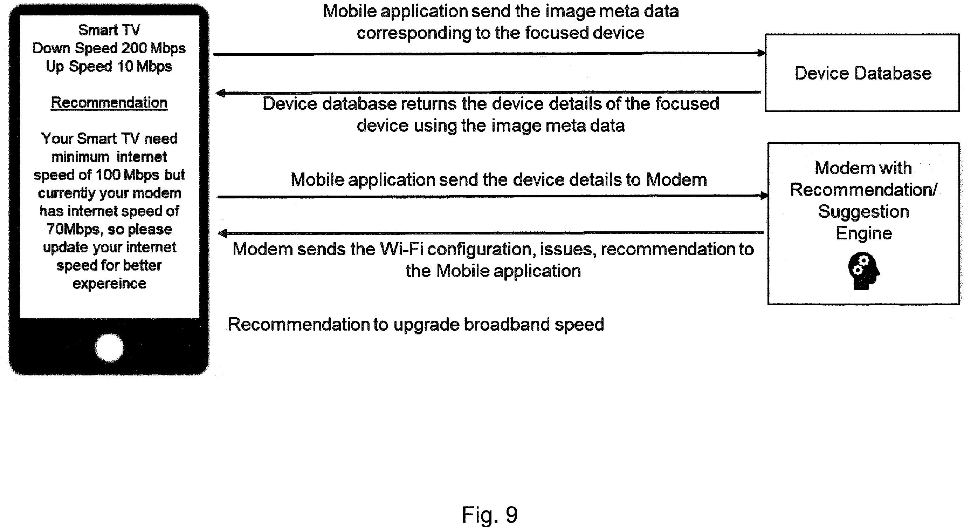

Figure 9 is a diagram, illustrating another application case according to various exemplary embodiments.

In particular, according to Figure 9, a Smart TV (Wi-Fi connected device) is focused (see upper part of Figure 5). The process according to Figure 9 is similar to the process according to Figure 8. According to Figure 9, however, the Smart TV's required minimum broadband is compared with the modem's current internet speed, and, as a result, recommendation to upgrade broadband speed is given.

The above-described procedures and functions may be implemented by respective functional elements, processors, or the like, as described below.

In the foregoing exemplary description of the device, only the circuitries that are relevant for understanding the principles according to at least some embodiments have been described. The apparatus may comprise further circuitries that are necessary for its respective operation. However, a description of these circuitries is omitted in this specification. The arrangement of the circuitries of the apparatus is not construed to limit the disclosure, and the functions may be performed by one circuitry or further split into sub-circuitries.

When in the foregoing description it is stated that the apparatus (or some other circuitry/means) is configured to perform some function, this is to be construed to be equivalent to a description stating that a (i.e. at least one) processor, potentially in cooperation with computer program code stored in a memory of the respective apparatus, is configured to cause the apparatus to perform at least the thus mentioned function. Also, such function is to be construed to be equivalently implementable by specifically configured means for performing the respective function (i.e. the expression "circuitry configured to" is construed to be equivalent to an expression such as "means for").

For the purpose of various example embodiments as described herein above, it should be noted that
- method steps likely to be implemented as software code portions and being run using a processor at a network server or network entity (as examples of devices, apparatuses and/or modules thereof, or as examples of entities including devices and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices or circuitries likely to be implemented as hardware components at the above-defined apparatus, or any module(s) thereof, are hardware independent and can be implemented using any known or future developed hardware technology or any hybrids of these;
- apparatuses or circuitries can be implemented as individual apparatuses or circuitries, but this does not exclude that they are implemented in a distributed fashion throughout the system, as long as the functionality of the apparatus or circuitry is preserved.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of various example embodiments. Devices and means can be implemented as individual devices, but this does not exclude that they are implemented in a distributed fashion throughout the system, as long as the functionality of the device is preserved. Such and similar principles are to be considered as known to a skilled person.

Various example embodiments also cover any conceivable combination of method steps and operations described above, and any conceivable combination of apparatuses or circuitries described above, as long as the above-described concepts of methodology and structural arrangement are applicable.

In view of the above, there is provided an apparatus controlling a wireless network, comprising a receiving circuitry configured to receive device identification information indicative of a device connected to the wireless network, a retrieving circuitry configured to retrieve device specification information indicative of at least one property of said device based on said device identification data, a determining circuitry configured to determine device environment information indicative of at least one environmental condition of said device, an analyzing circuitry configured to analyze said device specification information and said device environment information, a generating circuitry configured to generate a notification signal including a result of said analyzing circuitry, and a transmitting circuitry configured to transmit said notification signal.

Even though at least some embodiments are described above with reference to the examples according to the accompanying drawings, it is to be understood that the at least some embodiments are not restricted thereto. Rather, it is apparent to those skilled in the art that various exemplary embodiments can be modified in many ways without departing from the scope of the inventive idea as disclosed herein.

### List of acronyms and abbreviations

- AI:: Artificial Intelligence

- SSID:: Service Set Identifier

- RSSI:: Received Signal Strength Indicator

## Claims

1. An apparatus controlling a wireless network, comprising:
a receiving circuitry configured to receive device identification information indicative of a device connected to the wireless network,
a retrieving circuitry configured to retrieve device specification information indicative of at least one property of said device based on said device identification data,
a determining circuitry configured to determine device environment information indicative of at least one environmental condition of said device,
an analyzing circuitry configured to analyze said device specification information and said device environment information,
a generating circuitry configured to generate a notification signal including a result of said analyzing circuitry, and
a transmitting circuitry configured to transmit said notification signal.

2. The apparatus according to claim 1, wherein
said retrieving circuitry is configured to retrieve said device specification information from a device specification database.

3. The apparatus according to claim 1 or 2, wherein
the analyzing circuitry is configured to compare at least one item of said device specification information or said device environment information with a predetermined value.

4. The apparatus according to any of claims 1 to 3, wherein
the analyzing circuitry is configured to
ascertain a network related optimum condition with respect to said device based on said device specification information and said device environment information, and to
detect at least one wireless network related parameter to be adjusted to approach said network related optimum condition.

5. The apparatus according to claim 4, wherein
the analyzing circuitry is further configured to identify, for a first wireless network related parameter of said at least one wireless network related parameter, a parameter value to be set to approach said network related optimum condition as said result of said analyzing circuitry.

6. The apparatus according to claim 5, wherein
the receiving circuitry is further configured to receive a parameter value acknowledgment signal indicative of acknowledgment of setting said first wireless network related parameter to said parameter value, and
the apparatus further comprises
a setting circuitry configured to control setting said first wireless network related parameter to said parameter value.

7. The apparatus according to any of claims 1 to 6, wherein
said device is a first device, and wherein
a second device is connected to said wireless network,
a result of said analyzing circuitry with respect to said first device is based on first device specification information related to said first device and second device specification information related to said second device.

8. The apparatus according to any of claims 1 to 7, wherein
said device identification information is indicative of at least one of a manufacturer name of said device and a model name of said device, and/or
said at least one property of said device is at least one of a hostname, a MAC address, an wireless network interface type, a device type, a model number, a connected service set identifier (SSID), a received signal strength indicator (RSSI), an uplink rate requirement, a downlink rate requirement, and/or
said at least one environmental condition of said device is at least one of a channel score, a provided wireless network uplink rate, a provided wireless network downlink rate, a wireless network uplink error rate, a wireless network downlink error rate, information on an interference device, a service set identifier (SSID) of at least one neighbored wireless network, a received signal strength indicator (RSSI) of said at least one neighbored wireless network, a value indicative of experienced noise, a value indicative of channel utilization, a network uplink rate with respect to a connected internet port, and a network downlink rate with respect to said connected internet port.

9. The apparatus according to any of claims 1 to 8, wherein
if, as a result of the analyzing circuitry, an internet bandwidth experienced by said apparatus does not meet a demand of internet bandwidth requirement of said device, the notification signal comprises a suggestion to improve a bandwidth speed with specific data; and/or
if, as a result of the analyzing circuitry, said device is operating with a signal strength below a predetermined threshold, the notification signal comprises a suggestion to reposition the corresponding device or to establish extenders and/or beacons; and/or
if, as a result of the analyzing circuitry, interference details disturbing said wireless network are found, the notification signal comprises a suggestion to remove a source of the interference and/or to change to a less interference affected wireless network channel.

10. A method for controlling a wireless network, comprising:
receiving device identification information indicative of a device connected to the wireless network,
retrieving device specification information indicative of at least one property of said device based on said device identification data,
determining device environment information indicative of at least one environmental condition of said device,
analyzing said device specification information and said device environment information,
generating a notification signal including a result of said analyzing circuitry, and
transmitting said notification signal.

11. A computer program comprising instructions, which, when executed by a mobile device, cause the mobile device to carry out
capturing an image of a device connected to a wireless network,
determining device identification information indicative of said device based on said image,
transmitting said device identification information,
receiving, in response to said transmitting, a notification signal indicative of an analyzing result with respect to said device and said wireless network, and
displaying information based on said notification signal.

12. The computer program according to claim 11, further comprising instructions, which, when executed by a mobile device, cause the mobile device to carry out
processing said captured image, wherein
said determining is based on a result of said processing.

13. The computer program according to claim 11 or 12, wherein
in relation to said determining, the instructions, which, when executed by a mobile device, cause the mobile device to carry out
requesting said device identification information from a device database based on said image, and
receiving said device identification information from said device database.

14. The computer program according to any of claims 11 to 13, wherein
said notification signal is indicative of at least one of a hostname of said device, a MAC address of said device, an wireless network interface type of said device, a device type of said device, a model number of said device, a connected service set identifier (SSID), a received signal strength indicator (RSSI), an uplink rate requirement of said device, a downlink rate requirement of said device, a channel score, a provided wireless network uplink rate, a provided wireless network downlink rate, a wireless network uplink error rate, a wireless network downlink error rate, information on an interference device, a service set identifier (SSID) of at least one neighbored wireless network, a received signal strength indicator (RSSI) of said at least one neighbored wireless network, a value indicative of experienced noise, a value indicative of channel utilization, a network uplink rate with respect to a connected internet port, and a network downlink rate with respect to said connected internet port.

15. The computer program according to any of claims 11 to 14, wherein
said notification signal is indicative of a parameter value for a wireless network related parameter, the parameter value being to be set to approach a network related optimum condition with respect to said device, and
the instructions, which, when executed by a mobile device, cause the mobile device to carry out
displaying an acknowledgement button for acknowledgment of setting said parameter value, and
transmitting, in response to operation of said acknowledgement button by a user, a parameter value acknowledgment signal indicative of acknowledgment of setting said wireless network related parameter to said parameter value.
